(19) Europäisches Patentamt
European Patent Office
Office européen des brevets

(11) **EP 1 962 067 A2**

(12) **EUROPÄISCHE PATENTANMELDUNG**

(43) Veröffentlichungstag:
**27.08.2008 Patentblatt 2008/35**

(51) Int Cl.:
*G01F 25/00* (2006.01)    *G01F 1/68* (2006.01)
*G01P 13/00* (2006.01)

(21) Anmeldenummer: **08002597.6**

(22) Anmeldetag: **13.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **19.02.2007 AT 2532007**
**21.03.2007 DE 102007014052**
**19.09.2007 AT 14632007**

(71) Anmelder: **Vaillant GmbH**
**42859 Remscheid (DE)**

(72) Erfinder: **Rouxel, Jean-François**
**44260 La Chapelle Launay (FR)**

(74) Vertreter: **Hocker, Thomas**
**Vaillant GmbH**
**Berghauser Strasse 40**
**42859 Remscheid (DE)**

(54) **Verfahren zur Kalibrierung eines Strömungssensors mit einem oder zwei temperatursensitiven Widerständen**

(57) Bei einem Verfahren zur Nullpunkt-Kalibrierung und Strömungsrichtungserkennung eines Strömungssensors mit einem oder zwei hintereinander im Strömungsweg angeordneten elektrischen Widerständen (1, 10) mit positivem oder negativem Temperaturkoeffizient (PTC, NTC), deren Arbeitstemperatur $T_{R1}$, $T_{R10}$ höher als die Eintrittstemperatur $T_1$ des strömenden Mediums ist, wird dessen oder deren Leistungsaufnahme und / oder der Spannungsabfall an den Widerständen (1, 10) erfasst, wodurch sich feststellen lässt, wann keine Strömung vorliegt.

**Fig. 1**

**Beschreibung**

Die Erfindung bezieht sich auf ein Verfahren zur Kalibrierung eines Strömungssensors mit einem oder zwei temperatursensitiven Widerständen.

Temperatursensitive Widerstände weisen einen Widerstand auf, der sehr stark temperaturabhängig ist.

$$R(T) = R_0 \bullet \left(1 + \alpha\left(T - T_0\right)\right)$$

Hierbei ist R(T) der Widerstand als Funktion der Temperatur, $R_0$ der Widerstand bei der Basistemperatur $T_0$, $\alpha$ der Temperaturkoeffizient und T die Messtemperatur. Wird der Widerstand R an eine Spannung U angeschlossen, so stellt sich ein bestimmter Strom I ein. Für die aufgenommene Elektrische Leistung P gilt

$$P = U \bullet I = U \bullet \frac{U}{R} = \frac{U^2}{R}$$

Befindet sich der temperatursensitive Widerstand in einem Gasstrom, so wird der Widerstand durch den Gasstrom gekühlt und der Gasstrom um den gleichen Betrag erhitzt. Es gilt für den Wärmestrom

$$\dot{Q} = \alpha \bullet A \bullet (T_R - T_I)$$

wobei $\alpha$ der Wärmeübergangskoeffizient ist (nicht identisch mit dem Temperaturkoeffizienten $\alpha$ des temperatursensitiven Widerstands R), A die Wärmeübergangsfläche, $T_R$ die Temperatur des Widerstandes sowie $T_I$ die Temperatur des einströmenden Gases.

Durch das strömende Gas wird somit der temperatursensitive Widerstand R gekühlt. Bei einem temperatursensitiven Widerstand mit positivem Temperaturkoeffizient (PTC) sinkt somit der elektrische Widerstand. Durch den abfallenden elektrischen Widerstand steigt wiederum die elektrische Leistung, welche an dem Widerstand anfällt.

In vielen technischen Anwendungen ist es notwendig zu wissen, ob eine Gasströmung anliegt und in welche Richtung diese gegebenenfalls strömt. Letztendlich ist in vielen Fällen auch die Größe der Strömung von Bedeutung.

Befindet sich ein Strömungssensor in einer Leitung, in der sich auch ein Gebläse befindet, so ist ein ausgeschaltetes Gebläse kein Garant für die Abwesenheit einer Strömung; so kann beispielsweise bei einem Heizgerät Windeinfall in eine Abgasleitung zur Durchströmung des Gerätes führen.

Aufgabe der vorliegenden Erfindung ist es daher, bei einem Strömungssensor mit einem oder zwei temperatursensitiven Widerständen das Signal für das Vorliegen keiner Strömung in einem Kalibrierungsvorgang zu messen, sowie die Strömungsrichtung feststellen zu können. Letztendlich soll die Größe der Strömung messbar sein.

Erfindungsgemäß wird dies bei einem Strömungssensor mit einem oder zwei hintereinander im Strömungsweg angeordneten elektrischen Widerständen mit positivem oder negativem Temperaturkoeffizient (PTC, NTC), dessen oder deren Arbeitstemperatur $T_{R1}$, $T_{R10}$ höher als die Eintrittstemperatur $T_1$ des strömenden Mediums ist, wobei der oder die elektrischen Widerstände mit positivem oder negativem Temperaturkoeffizient (PTC, NTC) an eine Spannungsquelle angeschlossen werden und optional beim Vorhandensein zweier elektrischer Widerstände mit positivem oder negativem Temperaturkoeffizient (PTC, NTC) zwischen diesen beiden elektrischen Widerständen ein elektrischer Heizer mit positivem oder negativem Temperaturkoeffizient (PTC, NTC) angeordnet ist, durch die folgenden Verfahrensschritten gelöst: Der Volumenstrom durch den Sensor wird kontinuierlich von einer Strömungsrichtung zur anderen Strömungsrichtung variiert. Dabei wird die elektrische Gesamtleistungsaufnahme P des einen oder der beiden elektrischen Widerstände mit positivem oder negativem Temperaturkoeffizient (PTC, NTC) oder des elektrischen Heizers gemessen. Erreicht das Messsignal der elektrischen Gesamtleistungsaufnahme P einen Extremwert (Minimum oder Maximum), so wird dieses Messsignal oder ein anderes, gleichzeitig erfasstes Strom- oder Spannungssignal, welches sich mit der Widerstandsänderung des einen oder der beiden elektrischen Widerstände mit positivem oder negativem Temperaturkoeffizient (PTC, NTC) oder des elektrischen Heizers ändert, gespeichert und für den Betrieb als Signal für das Vorliegen keiner Strömung verwendet.

Gemäß Anspruch 2 wird dies mit einem Verfahren zur Nullpunktkalibrierung an einem Strömungssensor mit genau einem elektrischen Widerstand mit positivem oder negativem Temperaturkoeffizienten dadurch erreicht, dass der Volumenstrom durch den Sensor kontinuierlich von einer Strömungsrichtung zur anderen Strömungsrichtung variiert wird. Hierbei wird an dem elektrischen Widerstand die aufgenommene elektrische Leistung gemessen. Erreicht das Messsignal bei der Verwendung eines Widerstandes mit positivem Temperaturkoeffizient ein Minimum oder bei der Verwendung eines Widerstandes mit negativem Temperaturkoeffizient ein Maximum, so wird die dazugehörige elektrische Leistung gespeichert und für den Betrieb als Signal für das Vorliegen keiner Strömung (Nullpunktsignal) verwendet.

Die Ansprüche 3 bis 5 beziehen sich auf einen elektrischen Widerstand mit positivem Temperaturkoeffizienten.

Gemäß den Merkmalen des abhängigen Verfahrensanspruchs 3 kann die Strömungsrichtung festgestellt werden. Hierzu wird bei einem Signal, welches sich von dem Nullpunktsignal unterscheidet, die Strömung gezielt kontinuierlich in eine Richtung verändert. Kommt es zu einem Anstieg der gemessenen elektrischen Leistung, so wird darauf geschlossen, dass die anfängliche Strömung in die gleiche Richtung deutete und die ursprünglichen Strömung somit verstärkt wird, im anderen Fall die ursprüngliche Strömung in die entgegengesetzte Richtung gerichtet war.

Gemäß dem abhängigen Verfahrensanspruch 4 wird eine alternative Möglichkeit zur Feststellung der Strömungsrichtung geschützt. Hierzu wird bei einem Signal, das sich von dem Nullpunktsignal unterscheidet, die Strömung gezielt zuerst in die eine Richtung verändert und die elektrische Leistungsaufnahme gemessen und dann die Strömung gezielt in die andere Richtung verändert sowie die dazugehörige elektrische Leistungsaufnahme gemessen. Kommt es in dem einen Fall zu einem Anstieg des Signals, in dem anderen zu einer Minderung des Signals, so liegt eine anfängliche Strömung in Richtung der Strömungsveränderung, die zu einem Anstieg der elektrischen Leistung geführt hat, vor.

Anspruch 5 beschreibt und schützt ein weiteres Messverfahren. Hierzu wird, ausgehend von einem Signal, das sich von dem Nullsignal unterscheidet, die Strömung erst gezielt in eine Richtung verändert und dann in die andere Richtung. Am Ende des Vorgangs wird jeweils die Leistung aufgenommen. Kommt es in beiden Fällen zu einem Anstieg des Signals und wurde in beiden Fällen die Strömung um den gleichen Betrag verändert, so wird die Differenz der gemessenen elektrischen Leistungsaufnahmen bei den beiden Strömungsveränderungen gebildet. Hieraus lässt sich die Strömungsrichtung der ursprünglichen Strömung bestimmen.

Gemäß den Merkmalen des abhängigen Verfahrensanspruchs 6 kann beim Vorliegen eines Signals, dass sich vom Nullpunktsignal unterscheidet, aus der Differenz der elektrischen Leistungsaufnahme zum Minimumsignal ein Massenstrom errechnet werden. Hierzu ist es jedoch notwendig, den Sensor zunächst mit Hilfe eines weiteren Differenzdruck- oder eines sonstigen Strömungssensors einmalig zu kalibrieren.

Die Ansprüche 7 bis 9 beziehen sich auf einen elektrischen Widerstand mit negativem Temperaturkoeffizienten und bilden das Äquivalent zu den Ansprüchen 3 bis 5.

Gemäß Anspruch 10 wird die Aufgabe der Erfindung mit einem Verfahren zur Nullpunktkalibrierung an einem Strömungssensor mit zwei elektrischen, temperatursensitiven Widerständen mit positivem oder negativen Temperaturkoeffizienten dadurch gelöst, dass der Volumenstrom durch den Sensor kontinuierlich von einer Strömungsrichtung zur anderen Strömungsrichtung variiert wird. Hierbei wird die elektrische Leistungsaufnahme der elektrischen, temperatursensitiven Widerstände sowie die Differenzspannung an den beiden temperatursensitiven Widerständen beziehungsweise die Brückenspannung einer Brückenschaltung unter Einbeziehung dieser Widerstände gemessen. Erreicht die elektrische Leistungsaufnahme der elektrischen, temperatursensitiven Widerstände mit positivem Temperaturkoeffizient ein Minimum oder bei der Verwendung von Widerständen mit negativem Temperaturkoeffizienten ein Maximum, so wird die dazugehörige Differenz- oder Brückenschaltung gespeichert und für den Betrieb als Signal für das Vorliegen keiner Strömung (Nullpunktsignal) verwendet.

Gemäß den Merkmalen des abhängigen Verfahrensanspruchs 11 kann das Vorhandensein einer Strömung, deren Richtung sowie der Massenstrom festgestellt werden.

Gemäß den Merkmalen des unabhängigen Verfahrensanspruchs 12 wird ein Verfahren zur Nullpunktkalibrierung an einem Strömungssensor mit zwei elektrischen, temperatursensitiven Widerständen mit positivem oder negativen Temperaturkoeffizienten (wie bei Anspruch 10) sowie mit einem elektrischen Heizer mit positivem oder negativem Temperaturkoeffizienten zwischen den beiden temperatursensitiven Widerständen geschützt. Im Gegensatz zu Anspruch 10 wird gemäß Anspruch 12 die Heizleistung des Heizers anstelle der Leistungsaufnahme der beiden elektrischen, temperatursensitiven Widerstände mit positivem oder negativem Temperaturkoeffizienten aufgenommen.

Der abhängige Verfahrensanspruchs 13 bezieht sich auf Anspruch 12 und entspricht inhaltlich weitestgehend Anspruch 11, der sich auf Anspruch 10 bezieht.

Die Erfindung wird nun anhand der Figuren detailliert erläutert. Hierbei zeigen:

Figur 1 ein Strömungssensor mit einem temperatursensitiven Widerstand und Auswerteschaltung zur Durchführung des erfindungsgemäßen Verfahrens,

Figur 2 ein alternativer Aufbau mit einem Strömungssensor mit einem temperatursensitiven Widerstand,

Figuren 4 bis 7 Messungen bei der Durchführung des erfindungsgemäßen Verfahrens mit einem Strömungssensor mit einem temperatursensitiven Widerstand,

Figur 8 ein Strömungssensor mit zwei temperatursensitiven Widerständen und Auswerteschaltung zur Durchführung des erfindungsgemäßen Verfahrens,

Figur 9 ein Strömungssensor mit zwei temperatursensitiven Widerständen und alternativer Auswerteschaltung zur Durchführung des erfindungsgemäßen Verfahrens,

Figur 10 ein Strömungssensor mit zwei temperatursensitiven Widerständen und elektrischem Heizer zur Durchführung des erfindungsgemäßen Verfahrens,

Figur 11 ein Diagramm, welches die Abhängigkeit des Sensorsignals und der Heizleistung bei Verwendung temperatursensitiver Widerstände mit positivem Temperaturkoeffizienten bei einer Vorrichtung gemäß den Figuren 8 und 9 vom Volumenstrom zeigt und

Figur 12 ein Diagramm, welches die Abhängigkeit des Sensorsignals und der Heizleistung bei Verwendung eines temperatursensitiven Heizers mit negativem Temperaturkoeffizienten bei einer Vorrichtung gemäß Figur 10 vom Volumenstrom zeigt.

Gleiche Bezugszeichen in unterschiedlichen Figuren stehen für gleiche Bauteile; gleiche Variablen und Konstanten stehen für die gleichen Kennwerte.

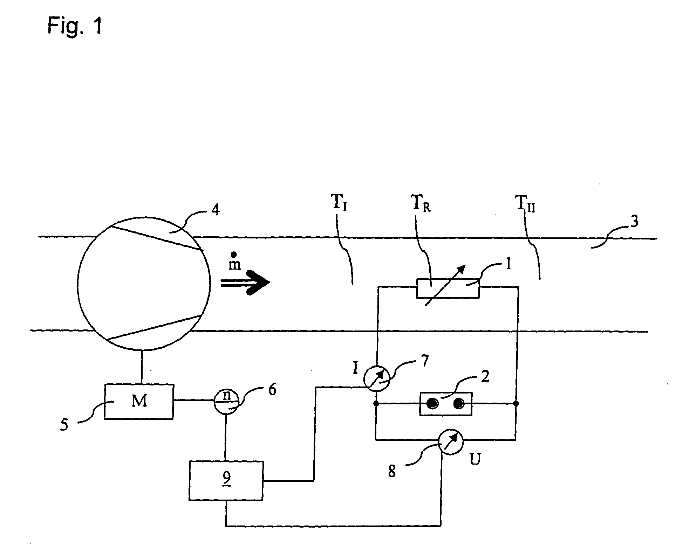

Figur 1 beschreibt einen Aufbau, bei dem sich ein temperatursensitiver Strömungssensor in einer Gebläseleitung befindet. Ein elektrischer Widerstand 1 mit positivem Temperaturkoeffizienten (PTC) befindet sich in einer Leitung 3, in der sich auch ein Gebläse 4 befindet. Das Gebläse 4 verfügt über einen Antriebsmotor 5, an dem ein Hallsensor 6 zur Erfassung der Drehzahl angeschlossen ist. Der Hallsensor 6 ist mit einer Regelung 9 verbunden. Der elektrische Widerstand 1 ist an eine Spannungsquelle 2 angeschlossen. Parallel zur Spannungsquelle 2 befindet sich ein Voltmeter 8, das an die Regelung angeschlossen ist. Im Stromkreis zwischen Spannungsquelle 2 und elektrischem Widerstand 1 befindet sich ein Amperemeter 7, das mit der Regelung 9 verbunden ist.

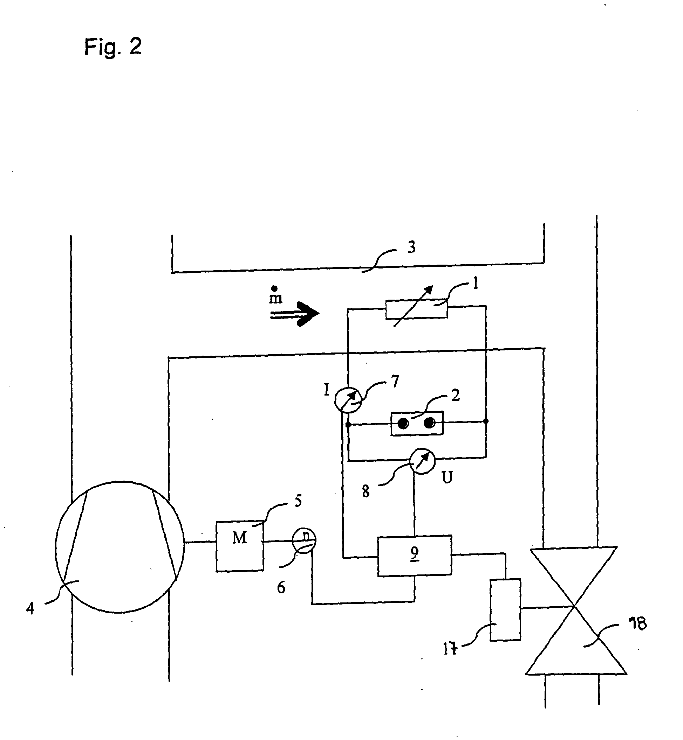

Figur 2 zeigt einen anderen Aufbau, bei dem sich der elektrische Widerstand 1 mit positivem Temperaturkoeffizienten (PTC) in einer Leitung 3 zwischen einer Leitung, in der sich ein Gebläse 4 befindet und einer Leitung mit einem Gasventil 18 befindet. Das Gebläse 4 verfügt wiederum über einen Motor 5 mit Hallsensor 6, welcher an die Regelung 9 angeschlossen ist. Das Gasventil 18 verfügt über einen Stellantrieb 17, welcher an die Regelung 9 angeschlossen ist.

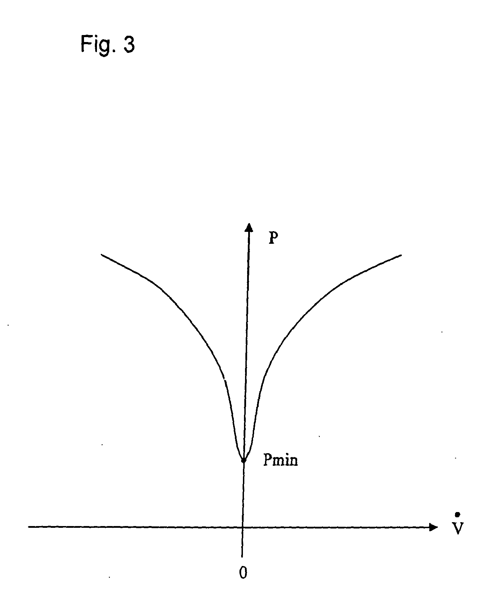

Figur 3 zeigt die Leistungsaufnahme P des elektrischen Widerstandes 1 bei unterschiedlichen Volumenströmen $\dot{V}$. Der Massenstrom unterscheidet sich vom Volumenstrom durch die Dichte $\rho$ des Fluids $\dot{m} = \dot{V} \bullet \rho$. Wie einleitend beschrieben, wird bei einer Fluidströmung der elektrische Widerstand 1 gekühlt, wodurch sein Widerstand absinkt und somit die Leistung ansteigt. Deshalb ist bei der Abwesenheit einer Strömung die Leistungsaufnahme des elektrischen Widerstands minimal.

Soll das Signal für das Vorliegen keiner Strömung in einem Kalibriervorgang gemessen werden, so wird der temperatursensitive Widerstand 1 in einer Richtung angeströmt, sodann wird die Strömung kontinuierlich zurückgenommen und kontinuierlich in die andere Richtung gefahren. Hierbei muss irgendwann die Strömung Null betragen; dies wird dadurch deutlich, dass eine minimale Leistung $P_{min}$ gemessen wird. Dies ist das Signal für das Vorliegen keiner Strömung.

In realen Aufbauten ist häufig auch ohne den Einsatz beispielsweise eines Gebläses - beispielsweise durch Wind - eine Strömung vorhanden, welche dafür sorgt, dass der elektrische Widerstand einer Fluidströmung ausgesetzt ist. Hierzu ist es notwendig, mit einer gezielten Strömung die vorhandene Strömung zu egalisieren.

Bei einem Aufbau gemäß Figur 1 wird das Gebläse 4 in eine Richtung betrieben und sodann die Drehzahl des Gebläses kontinuierlich zurückgenommen und dann das Gebläse in die andere Richtung betrieben. Hierbei wird irgendwann die minimale elektrische Leistung des Widerstandes 1, welcher sich aus dem Produkt der Spannung U und des Stromes I ergeben, gemessen. Das Voltmeter 8 und das Amperemeter 7 sind mit der Regelung 9 verbunden, so dass die minimale Leistungsaufnahme $P_{min}$ des Widerstands 1 erfasst werden kann.

Bei einer Vorrichtung gemäß Figur 2 kann von der einen Seite der elektrische Widerstand 1 durch eine Luftströmung des Gebläses 4 durchströmt werden, andererseits kann ein Gasstrom, welcher über das Gasventil 18 läuft, in die andere Richtung über den elektrischen Widerstand 1 laufen.

Zur Kalibrierung des Nullsignals wird beispielsweise zuerst das Gebläse 4 eingeschaltet, das dafür sorgt, dass der elektrische Widerstand von unten nach oben von Luft umströmt wird. Bei einem konstanten oder verringertem Volumenstrom kann nun das Gasventil 18 kontinuierlich über seinen Stellantrieb 9 geöffnet werden. Sodann strömt Gas dem Luftstrom entgegen. Ist der Druck, welcher aus Volumenstrom aus dem Gasventil 18 resultiert genauso groß wie der Druck, welcher das Gebläse 4 auf der anderen Seite aufbaut, so findet kein Volumenstrom in dem Messkanal 3 statt. In diesem Fall stellt sich das Minimum der aufgenommenen elektrischen Leistung $P_{min}$ ein.

Aufbauten gemäß Figur 2 werden vorzugsweise in brenngasbetriebenen Heizungsbrennern eingesetzt. Mittels der so genannten Nulldruckregelung wird erreicht, dass das Verhältnis von Brenngas zu Luft stets konstant ist.

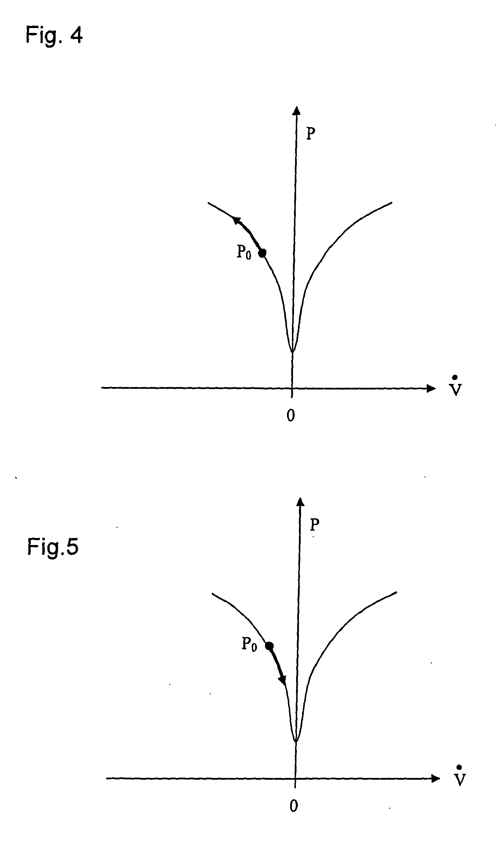

Die Figuren 4 und 5 verdeutlichen ein Verfahren zur Feststellung der Durchströmungsrichtung. Ausgehend von einer elektrischen Leistung $P_0$, welche sich von der Leistung $P_{min}$ unterscheidet, wird der Volumenstrom verändert. Figur 4 zeigt einen Anstieg der gemessenen elektrischen Leistung. Dies ist gleichbedeutend damit, dass die Strömung in gleiche Richtung verstärkt wurde. Demgegenüber zeigt Figur 5 den Fall, in dem die elektrische Leistung abfällt. Dies ist ein Indiz, dass die veränderte Strömung in Gegenrichtung zur ursprünglichen Strömung erfolgte.

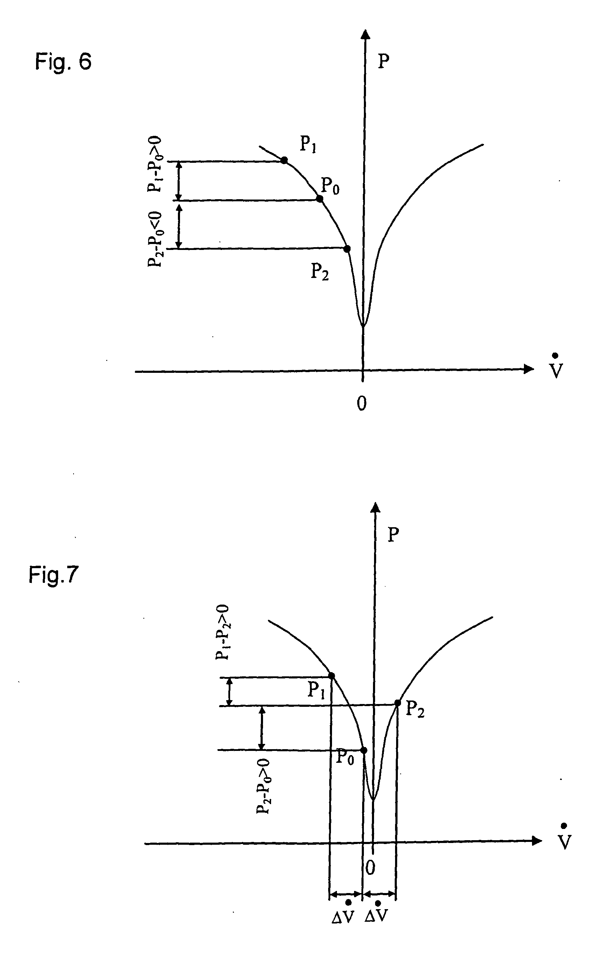

Figur 6 zeigt den Fall, dass ausgehend von einer elektrischen Leistung $P_0$, welche ungleich der minimalen Leistung $P_{min}$ ist, die Strömung zunächst in eine Richtung verändert wird und dann eine erhöhte Leistung $P_1$ aufgenommen wird und in den anderen Fall die Strömung in die andere Richtung erfolgt, wodurch die aufgenommene Leistung $P_2$ kleiner als die ursprüngliche Leistung $P_0$ ist. Hierdurch wird deutlich, dass die ursprüngliche Strömung in die Richtung der ersten Veränderung deutete.

Figur 7 zeigt den Fall, dass ausgehend von einer Leistung $P_0$, welche nicht dem Nullsignal $P_{min}$ entspricht, bei beiden Veränderungen jeweils entgegen der Strömungsrichtung höhere elektrische Leistungen $P_1$, $P_2$ gemessen werden als das Ursprungssignal $P_0$. Wurde in beiden Fällen die Strömung um einen gleichen Betrag in unterschiedliche Richtungen verändert, so wird die Differenz der elektrischen Leistungen $P_1$ und $P_2$ herangezogen. In Figur 7 befinden sich $P_0$ und $P_1$ auf der negativen Seite der Strömungsgeschwindigkeit, während $P_2$ auf der positiven Seite ist. Wird die Differenz aus $P_1$ zu $P_2$ gebildet, so ist diese positiv. Dies ist ein Beweis dafür, dass die ursprüngliche Strömung in die gleiche Richtung wie die erste Abänderung strömte.

Bei der Verwendung eines Strömungssensors mit negativem Temperaturkoeffizienten wird beim Vorliegen keiner Strömung ein Maximum der elektrischen Leistung gemessen. Das erfindungsgemäße Verfahren wird in bei einem derartigen Sensor analog angewendet. Der Abfall der elektrischen Leistung ist somit ein Indiz für einen absoluten Anstieg der Strömung.

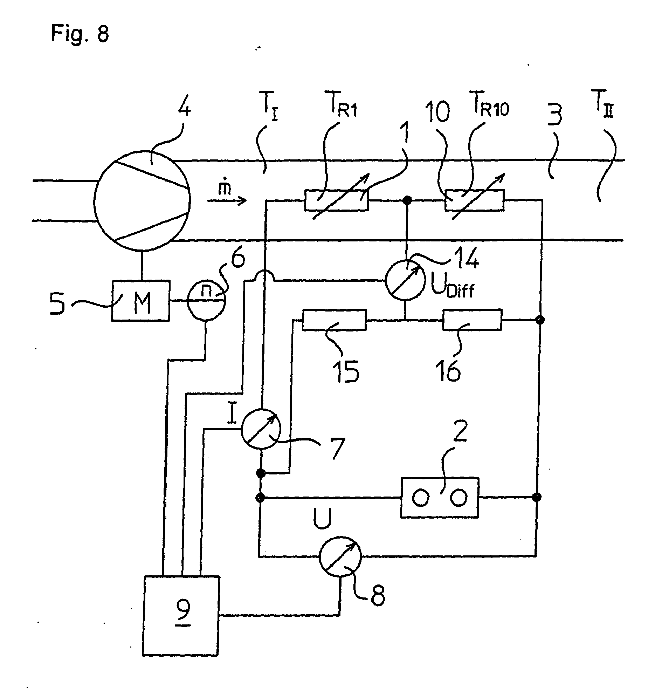

Figur 8 beschreibt einen Aufbau, bei dem sich ein temperatursensitiver Strömungssensor in einer Gebläseleitung befindet. Zwei in Reihe geschaltete elektrische Widerstände 1, 10 mit jeweils positivem Temperaturkoeffizienten (PTC) befinden sich in einer Leitung 3, in der sich auch ein Gebläse 4 befindet. Das Gebläse 4 verfügt über einen Antriebsmotor 5, an dem ein Hallsensor 6 zur Erfassung der Drehzahl angeschlossen ist. Der Hallsensor 6 ist mit einer Regelung 9 verbunden. Die elektrischen Widerstände 1, 10 sind an eine Spannungsquelle 2 angeschlossen. Parallel zu den elektrischen Widerständen 1, 10 mit positivem Temperaturkoeffizienten (PTC) befinden sich zwei in Reihe geschaltete Konstantwiderstände 15, 16 mit konstantem Widerstand. Parallel zur Spannungsquelle 2 befindet sich ein Voltmeter 8, das die Gesamtspannung U der Spannungsquelle 2 misst und an die Regelung 9 angeschlossen ist. Im Stromkreis zwischen Spannungsquelle 2 und den elektrischen Widerständen 1, 10 befindet sich ein Amperemeter 7, das den Strom I durch die beiden elektrischen Widerstände 1, 10 - nicht jedoch durch die beiden Konstantwiderständen 15, 16 - misst und mit der Regelung 9 verbunden ist. Ein zweites Voltmeter 14 ist einerseits mit der elektrischen Leitung zwischen den beiden elektrischen Widerständen 1, 10 und anderseits mit der elektrischen Leitung zwischen den beiden Konstantwiderständen 15, 16 verbunden; es misst die Brückenspannung $U_{Diff}$

Durch die Leitung 3 strömt ein Luftmassenstrom $\dot{m}$. Der Massenstrom unterscheidet sich vom Volumenstrom durch die Dichte $\rho$ des Fluids $\dot{m} = \dot{V} \cdot \rho$. Hinter dem Gebläse 4 herrscht eine Temperatur $T_I$. Der elektrische Widerstand 1 mit positivem Temperaturkoeffizienten (PTC) besitzt die Temperatur $T_{R1}$, der elektrische Widerstand 10 mit positivem Temperaturkoeffizienten (PTC) besitzt die Temperatur $T_{R10}$. Hinter dem Strömungssensor herrscht in der Leitung 3 die Temperatur $T_{II}$

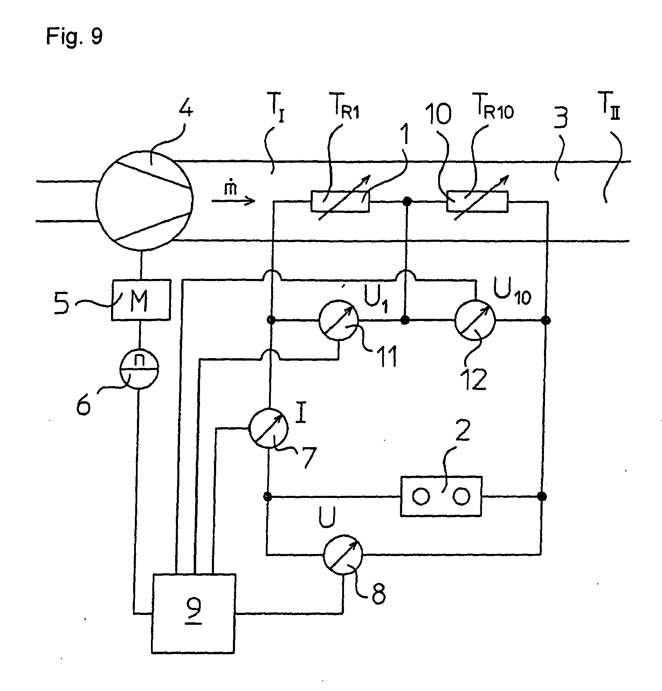

Figur 9 unterschiedet sich von Figur 8 dadurch, dass zwei Voltmeter 11, 12 parallel zu den beiden elektrischen Widerständen 1, 10 mit positivem Temperaturkoeffizienten (PTC) den Spannungsabfall $U_1$, $U_{10}$ an den beiden elektrischen Widerständen 1, 10 messen. Die beiden Voltmeter sind mit der Regelung 9 verbunden. Die Regelung 9 ermittelt aus der Differenz der beiden Spannungsabfälle $U_1$, $U_{10}$ die Brückenspannung $U_{Diff}$. Das Amperemeter 7 misst den Gesamtstrom I der Messschaltung.

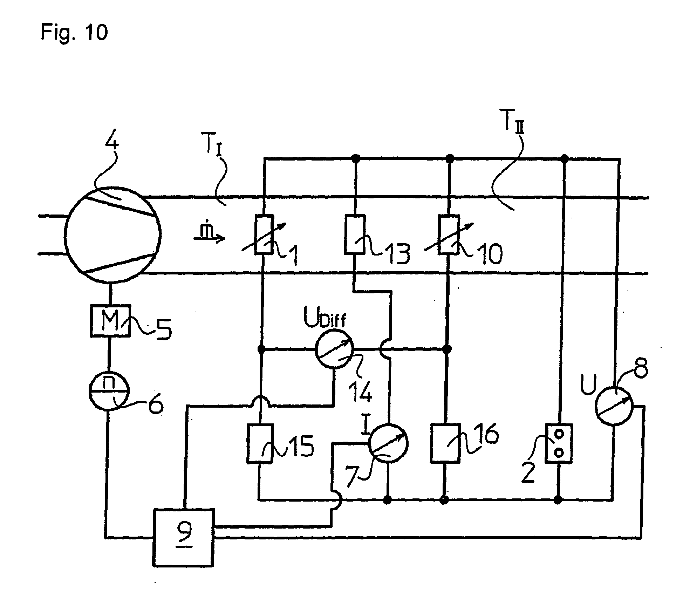

Figur 10 zeigt einen temperatursensitiven Strömungssensor mit zwei in einer Leitung 3 hintereinander angeordneten elektrischen Widerständen 1, 10 mit positivem Temperaturkoeffizienten (PTC). Zwischen den beiden Widerständen 1, 10 ist ein elektrischer Heizer 13 angeordnet. Die beiden elektrischen Widerstände 1, 10 mit positivem Temperaturkoeffizienten (PTC) sind jeweils mit einem Konstantwiderstand 15, 16 mit konstantem Widerstand in Reihe geschaltet und mit derselben Spannungsquelle 2 verbunden. Ein mit einer Regelung 9 verbundenes Voltmeter 14 misst die Brückenspannung $U_{Diff}$ der Brückenschaltung der beiden elektrischen Widerstände 1, 10 mit positivem Temperaturkoeffizienten (PTC) und der beiden Konstantwiderstände 15, 16. Ein Voltmeter 8 misst die Spannung U der Spannungsquelle 2, ein Amperemeter 7 den Strom I durch den Heizer 13.

Bei dem Aufbau gemäß Figur 8 strömt ein Luftmassenstrom $\dot{m}$ durch das Gebläse 4 mit der Temperatur $T_I$ in die Leitung 3. Der temperatursensitive Widerstand 1 wird durch den Luftmassenstrom $\dot{m}$ gekühlt und gibt dabei Wärme an den Luftmassenstrom $\dot{m}$ ab. Es stellt sich nach kurzer Zeit ein Gleichgewichtszustand ein, bei dem gilt:

$$U = U_1 + U_{10} = U_{15} + U_{16}$$

$$U_1 = U \cdot \left( \frac{R_1}{R_1 + R_{10}} \right)$$

$$U_{15} = U \cdot \left( \frac{R_{15}}{R_{15} + R_{16}} \right)$$

$$U_{Diff} = U_1 - U_{15} = U \cdot \left( \frac{R_1}{R_1 + R_{10}} - \frac{R_{15}}{R_{15} + R_{16}} \right)$$

$$U_{Diff} = U \cdot \left( \frac{R_{1,0} \bullet (1 + \alpha(T_{R1} - T_0))}{R_{1,0} \bullet (1 + \alpha(T_{R1} - T_0)) + R_{10,0} \bullet (1 + \alpha(T_{R10} - T_0))} - \frac{R_{15}}{R_{15} + R_{16}} \right)$$

Hierbei ist $R_{1,0}$ der Widerstand des elektrischen Widerstands 1 bei der Basistemperatur $T_0$ und $R_{10,0}$ der Widerstand des elektrischen Widerstands 10 bei der Basistemperatur $T_0$.

Bezüglich der Heizleistung P der beiden temperatursensitiven Widerstände 1, 10 gilt:

$$P = U \cdot I = \frac{U^2}{R_1 + R_{10}} = \frac{U^2}{R_{1,0} \cdot (1 + \alpha(T_{R1} - T_0)) + R_{10,0} \cdot (1 + \alpha(T_{R10} - T_0))}$$

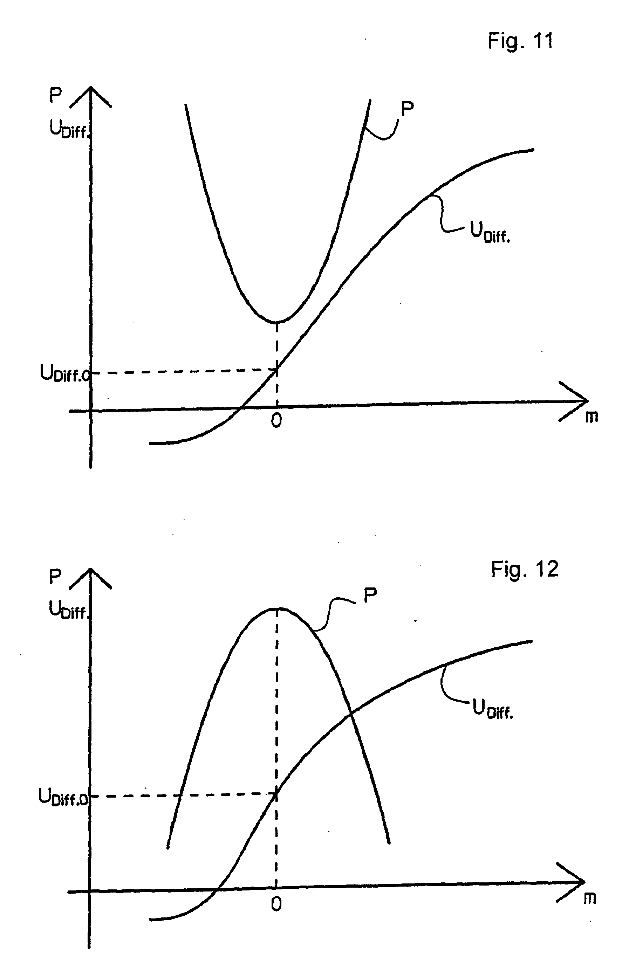

Die Verläufe der Heizleistung P und der Differenzspannung $U_{Diff}$ über den Luftmassenstrom $\dot{m}$ sind in Figur 11 dargestellt. Durch strömendes Gas werden die beiden temperatursensitiven Widerstände 1, 10 gekühlt. Aufgrund deren positiven Temperaturkoeffizienten (PTC) sinken deren elektrische Widerstände bei einer Erhöhung des Massenstroms und der damit verbundenen Kühlung, was einen Anstieg der elektrischen Leistung zur Folge hat. Bei der Abwesenheit einer Strömung ist die elektrische Leistungsaufnahme P minimal. Der Verlauf der Differenzspannung $U_{Diff}$ hingegen ist stetig wachsend, so dass jeder Differenzspannung $U_{Diff}$ eindeutig ein bestimmter Luftmassenstrom $\dot{m}$ zugeordnet werden kann.

Bei dem Aufbau gemäß Figur 9 gilt bezüglich der Differenzspannung $U_{Diff}$:

$$U = U_1 + U_{10}$$

$$U_1 = U \cdot \left( \frac{R_1}{R_1 + R_{10}} \right)$$

$$U_{Diff} = U_1 - U_{10} = U \cdot \left( \frac{R_1 - R_{10}}{R_1 + R_{10}} \right)$$

$$U_{Diff} = U \cdot \left( \frac{R_{1,0} \cdot \left(1 + \alpha(T_{R1} - T_0)\right) - R_{10,0} \cdot \left(1 + \alpha(T_{R10} - T_0)\right)}{R_{1,0} \cdot \left(1 + \alpha(T_{R1} - T_0)\right) + R_{10,0} \cdot \left(1 + \alpha(T_{R10} - T_0)\right)} \right)$$

Auch bei einem derartigen Aufbau hat die Leistungsaufnahme P der beiden temperatursensitiven Widerstände 1, 10 aufgrund deren positiven Temperaturkoeffizienten (PTC) bei der Abwesenheit einer Strömung ein Minimum und jeder Differenzspannung $U_{Diff}$ kann eindeutig ein bestimmter Luftmassenstrom $\dot{m}$ zugeordnet werden. Figur 11 findet qualitativ ebenfalls Anwendung.

Bei dem erfindungsgemäßen Verfahren mit zwei temperatursensitiven Widerständen 1, 10 mit positivem Temperaturkoeffizienten (PTC) wird bei einer Vorrichtung gemäß Figur 8 oder 9 der Volumenstrom durch den Sensor kontinuierlich von einer Strömungsrichtung zur anderen Strömungsrichtung variiert. Hierbei wird sowohl die elektrische Leistungsaufnahme P der beiden temperatursensitiven Widerstände 1, 10, als auch die Differenzspannung $U_{Diff}$ erfasst. Erreicht das Messsignal der Leistungsaufnahme P einen Extremwert, so ist dies gleichbedeutend mit dem Vorhandensein keiner Strömung (Nullpunkt). Die Differenzspannung $U_{Diff}$, welche zu diesem Zeitpunkt gemessen wird, wird als Referenzdifferenzspannungssignal $U_{Diff,0}$, für das Vorliegen keiner Strömung abgespeichert.

Durch das kontinuierliche Verändern der Strömung durch den Sensor kann eine Kennlinie aufgenommen werden. Wird unter Referenzbedingungen ein weiterer, kalibrierter Massenstromsensor eingesetzt, so kann eine quantitative Zuordnung erfolgen. Diese dient im späteren Betrieb der Erfassung des Massenstroms, da in diesem Betrieb einer gemessenen Differenzspannung $D_{Diff}$, eindeutig ein bestimmter Luftmassenstrom $\dot{m}$ zugeordnet werden kann. Alternativ kann der Massenstrom $\dot{m}$ vorzugsweise iterativ errechnet werden. Hierbei ist zu berücksichtigen, dass die Temperatur des - in diesem Beispiel - in Strömungsrichtung zweiten temperatursensitiven Widerstandes 10 von der Eingangstemperatur $T_1$, der Wärmeabgabe des in Strömungsrichtung ersten temperatursensitiven Widerstandes 1 und dem Massenstroms $\dot{m}$ abhängig ist.

Bei dem Aufbau gemäß Figur 10 wird durch den Heizer 13 Wärme auf den Luftmassenstrom $\dot{m}$ übertragen. Es gilt:

$$U = U_1 + U_{15} = U_{10} + U_{16}$$

$$U_1 = U \cdot \left( \frac{R_1}{R_1 + R_{15}} \right)$$

$$U_{10} = U \cdot \left( \frac{R_{10}}{R_{10} + R_{16}} \right)$$

$$U_{Diff} = U_1 - U_{10} = U \cdot \left( \frac{R_1}{R_1 + R_{15}} - \frac{R_{10}}{R_{10} + R_{16}} \right)$$

$$U_{Diff} = U \cdot \left( \frac{R_{1,0} \cdot (1 + \alpha(T_{R1} - T_0))}{R_{1,0} \cdot (1 + \alpha(T_{R1} - T_0)) + R_{15}} - \frac{R_{10,0} \cdot (1 + \alpha(T_{R10} - T_0))}{R_{10,0} \cdot (1 + \alpha(T_{R10} - T_0)) + R_{16}} \right)$$

Bezüglich des Heizers 13 mit seinem Widerstand $R_{13}$ gilt bezüglich seiner Heizleistung P und der auf den Luftmassenstrom $\dot{m}$ übertragen Wärme $\dot{Q}$:

$$U = R_{13} \cdot I$$

$$P = U \cdot I = \frac{U^2}{R_{13}}$$

$$P = \dot{Q} = \dot{m} \cdot c_p \cdot \Delta T$$

Hierbei ist $\Delta T$ die Temperaturerhöhung des Luftmassenstrom $\dot{m}$ aufgrund der Heizleistung P des Heizers 13. Da der Heizer 13 über einen temperatursensitiven Widerstand verfügt, ändert sich dessen Widerstand $R_{13}$ bei einer Änderung des Luftmassenstroms $\dot{m}$

Figur 12 zeigt den Zusammenhang zwischen Heizleistung P des Heizers 13 mit negativem Temperaturkoeffizienten (NTC), Differenzspannung $U_{Diff}$ sowie dem Luftmassenstrom $\dot{m}$ bei einer Vorrichtung gemäß Figur 10.

Durch strömendes Gas werden nicht nur die beiden temperatursensitiven Widerstände 1, 10, sondern auch der Heizer 13 gekühlt. Aufgrund des negativen Temperaturkoeffizienten (NTC) des Heizers 13 steigt dessen elektrischer Widerstand $R_{13}$ bei Kühlung, was einen Abfall der elektrischen Leistung P zur Folge hat. Bei der Abwesenheit einer Strömung ist die elektrische Leistungsaufnahme P maximal. Der Verlauf der Differenzspannung $U_{Diff}$ hingegen ist stetig wachsend, so dass jeder Differenzspannung $U_{Diff}$ eindeutig ein bestimmter Luftmassenstrom $\dot{m}$ zugeordnet werden kann.

Sind die Widerstände der beiden temperatursensitiven Widerstände 1, 10 hoch, so fällt die Wärmeabgabe dieser Widerstände 1, 10 im Vergleich zu einem relativ niederohmigen Heizer 13 wenig ins Gewicht. Es gilt dann:

$$R_1 = R_{1,0} \cdot (1 + \alpha(T_{R1} - T_{R1,0}))$$

$$R_{10} = R_{10,0} \cdot (1 + \alpha(T_{R10} - T_{R10,0}))$$

$$U_{Diff} = U_1 - U_{10} = U \cdot \left( \frac{R_1}{R_1 + R_{15}} - \frac{R_{10}}{R_{10} + R_{16}} \right)$$

$$P = \dot{Q} = \dot{m} \cdot c_p \cdot \left(T_{R10} - T_{R1}\right)$$

$$\dot{m} = \frac{P}{c_p \cdot \left(T_{R10} - T_{R1}\right)}$$

Hieraus kann der Massenstrom $\dot{m}$ vorzugsweise iterativ errechnet werden.

Erfindungsgemäß sind auch vielfältige Kombinationsmaßnahmen bezüglich der Temperatursensitivität (NTC, PTC), Verschaltung der Widerstände sowie Aufnahme und Auswertung der Signale geschützt.

Ein zuvor beschriebener Sensor kann besonders vorteilhaft zum Beispiel wie aus EP 1 084 369 B1 bekannt in einem Heizgerät, welches in einem vorgegebenen Verhältnis Brenngas und Luft benötigt, eingesetzt werden. Der Sensor befindet sich dann in einer Verbindung zwischen der Brenngas- und Luftleitung. Ist das Brenngas-Luft-Verhältnis optimal, so wird der Sensor nicht durchströmt. Wird der Sensor hingegen durchströmt, so liegt ein falsches Mischverhältnis vor. Ist auch die Richtung der Strömung bekannt, so kann gezielt Brenngas und / oder Verbrennungsluft hinzugegeben oder weggenommen werden bis der Sensor wieder nicht durchströmt wird und dementsprechend ein optimales Brenngas-Luft-Gemisch vorliegt.

Bezugszeichenliste

elektrischer Widerstand 1
Spannungsquelle 2
Leitung 3
Gebläse 4
Antriebsmotor 5
Hallsensor 6
Amperemeter 7
Voltmeter 8
Regelung 9
elektrischer Widerstand 10
Heizer 13
Voltmeter 14
Konstantwiderstand 15
Konstantwiderstand 16
Stellantrieb 17
Gasventil 18

**Patentansprüche**

1. Verfahren zur Nullpunkt-Kalibrierung und Strömungsrichtungserkennung eines Strömungssensors mit einem oder zwei hintereinander im Strömungsweg angeordneten elektrischen Widerständen (1, 10) mit positivem oder negativem Temperaturkoeffizient (PTC, NTC), dessen oder deren Arbeitstemperatur $T_{R1}$, $T_{R10}$ höher als die Eintrittstemperatur $T_I$ des strömenden Mediums ist, wobei der oder die elektrischen Widerstände (1, 10) mit positivem oder negativem Temperaturkoeffizient (PTC, NTC) an eine Spannungsquelle (2) angeschlossen werden, wobei optional beim Vorhandensein zweier elektrischer Widerstände (1, 10) mit positivem oder negativem Temperaturkoeffizient (PTC, NTC) zwischen diesen beiden elektrischen Widerständen (1, 10) ein elektrischer Heizer (13) mit positivem oder negativem Temperaturkoeffizient (PTC, NTC) angeordnet ist, mit folgenden Verfahrensschritten:

   • der Volumenstrom durch den Sensor wird kontinuierlich von einer Strömungsrichtung zur anderen Strömungsrichtung variiert,
   • dabei wird die elektrische Gesamtleistungsaufnahme P des einen oder der beiden elektrischen Widerstände (1, 10) mit positivem oder negativem Temperaturkoeffizient (PTC, NTC) oder des elektrischen Heizers (13) gemessen,

• erreicht das Messsignal der elektrischen Gesamtleistungsaufnahme P ein Minimum oder Maximum, so wird dieses Messsignal oder ein anderes, gleichzeitig erfasstes Strom- oder Spannungssignal, welches sich mit der Widerstandsänderung des einen oder der beiden elektrischen Widerstände (1, 10) mit positivem oder negativem Temperaturkoeffizient (PTC, NTC) oder des elektrischen Heizers (13) ändert, gespeichert und für den Betrieb als Signal für das Vorliegen keiner Strömung verwendet.

**2.** Verfahren zur Nullpunkt-Kalibrierung und Strömungsrichtungerkennung eines Strömungssensors nach Anspruch 1 mit genau einem elektrischen Widerstand (1) mit positivem oder negativem Temperaturkoeffizient (PTC, NTC), dessen Arbeitstemperatur $T_R$ höher als die Eintrittstemperatur $T_1$ des strömenden Mediums ist, wobei der elektrischen Widerstand (1) mit positivem oder negativem Temperaturkoeffizient (PTC, NTC) an eine Spannungsquelle (2) angeschlossen wird und die elektrische Leistungsaufnahme des elektrischen Widerstands (1) mit positivem oder negativem Temperaturkoeffizient (PTC, NTC) gemessen wird, mit folgenden Verfahrensschritten:

• der Volumenstrom durch den Sensor wird kontinuierlich von einer Strömungsrichtung zur anderen Strömungsrichtung variiert,

• dabei wird an dem elektrischen Widerstand (1) mit positivem oder negativem Temperaturkoeffizient (PTC, NTC) die elektrische Leistung P gemessen,

• erreicht das Messsignal bei Verwendung eines elektrischen Widerstand (1) mit positivem Temperaturkoeffizient (PTC) bei der kontinuierlichen Veränderung des Volumenstroms ein Minimum, so wird die elektrische Leistung $P_{min}$ gespeichert und für den Betrieb als Signal für das Vorliegen keiner Strömung verwendet,

• wohingegen bei Verwendung eines elektrischen Widerstand (1) mit negativem Temperaturkoeffizient (NTC) in dem Fall, in dem das Messsignal bei der kontinuierlichen Veränderung des Volumenstroms ein Maximum erreicht, die elektrische Leistung $P_{max}$ gespeichert und für den Betrieb als Signal für das Vorliegen keiner Strömung verwendet wird.

**3.** Verfahren zur Nullpunkt-Kalibrierung und Strömungsrichtungerkennung eines Strömungssensors mit elektrischem Widerstand (1) mit positivem Temperaturkoeffizient (PTC) nach Anspruch 2, **dadurch gekennzeichnet, dass** beim Vorliegen eines Signals $P_0$, das sich vom Signal $P_{min}$ für das Vorliegen keiner Strömung unterscheidet, die anfängliche Strömung in eine gezielte Richtung kontinuierlich verändert wird und bei einem stetigen Anstieg der gemessenen elektrischen Leistung eine anfängliche Strömung in gleicher Richtung und bei einer Reduzierung der gemessenen elektrischen Leistung eine anfängliche Strömung in entgegen gesetzter Richtung vorliegt.

**4.** Verfahren zur Nullpunkt-Kalibrierung und Strömungsrichtungerkennung eines Strömungssensors mit elektrischem Widerstand (1) mit positivem Temperaturkoeffizient (PTC) nach Anspruch 2, **dadurch gekennzeichnet, dass** beim Vorliegen eines Signals $P_0$, das sich vom Signal $P_{min}$ für das Vorliegen keiner Strömung unterscheidet, die Strömung erst gezielt in eine Richtung verändert wird und die elektrische Leistungsaufnahme $P_1$ gemessen wird, dann die Strömung gezielt in die andere Richtung verändert wird und die elektrische Leistungsaufnahme $P_2$ gemessen wird, in dem Fall, in dem eine Strömungsveränderung zu einem Anstieg des Signals und die andere Strömungsveränderung zu einer Minderung des Signals führt, eine anfängliche Strömung in Richtung der Strömungsveränderung, die zu einem Anstieg geführt hat, vorliegt.

**5.** Verfahren zur Nullpunkt-Kalibrierung und Strömungsrichtungerkennung eines Strömungssensors mit elektrischem Widerstand (1) mit positivem Temperaturkoeffizient (PTC) nach Anspruch 2, **dadurch gekennzeichnet, dass** beim Vorliegen eines Signals $P_0$, das sich vom Signal $P_{min}$ für das Vorliegen keiner Strömung unterscheidet, die Strömung erst gezielt in eine Richtung verändert wird und die elektrische Leistungsaufnahme $P_1$ gemessen wird, dann die Strömung gezielt in die andere Richtung verändert wird und die elektrische Leistungsaufnahme $P_2$ gemessen wird, in dem Fall, in dem beide Strömungsveränderungen zu einem Anstieg des Signals führen, bei jeweils gleicher Strömungsveränderung die Differenz zwischen der ersten und zweiten gemessenen elektrischen Leistungsaufnah- me bei Strömungsveränderung ($P_1$-$P_2$) gebildet wird und im Fall einer positiven Differenz eine anfängliche Strömung in Richtung der ersten Strömungsveränderung vorliegt und im Fall einer negativen Differenz eine anfängliche Strömung in Richtung der zweiten Strömungsveränderung vorliegt.

**6.** Verfahren zur Nullpunkt-Kalibrierung und Strömungsrichtungerkennung eines Strömungssensors nach Anspruch 2 oder 3, **dadurch gekennzeichnet, dass** beim Vorliegen eines Signals, das sich vom Signal für das Vorliegen keiner Strömung unterscheidet, aus der Differenz der gemessenen elektrischen Leistung zum Minimum der Lei- stungsaufnahme $P_{min}$ unter Berücksichtigung der Wärmekapazität des strömenden Mediums der Massenstrom errechnet wird.

7. Verfahren zur Nullpunkt-Kalibrierung und Strömungsrichtungerkennung eines Strömungssensors mit elektrischem Widerstand (1) mit negativem Temperaturkoeffizient (NTC) nach Anspruch 2, **dadurch gekennzeichnet, dass** beim Vorliegen eines Signals $P_0$, das sich vom Signal $P_{max}$ für das Vorliegen keiner Strömung unterscheidet, die anfängliche Strömung in eine gezielte Richtung kontinuierlich verändert wird und bei einem stetigen Abfall der gemessenen elektrischen Leistung eine anfängliche Strömung in gleicher Richtung und bei einem Anstieg der gemessenen elektrischen Leistung eine anfängliche Strömung in entgegen gesetzter Richtung vorliegt.

8. Verfahren zur Nullpunkt-Kalibrierung und Strömungsrichtungerkennung eines Strömungssensors mit elektrischem Widerstand (1) mit negativem Temperaturkoeffizient (NTC) nach Anspruch 2, **dadurch gekennzeichnet, dass** beim Vorliegen eines Signals $P_0$, das sich vom Signal $P_{max}$ für das Vorliegen keiner Strömung unterscheidet, die Strömung erst gezielt in eine Richtung verändert wird und die elektrische Leistungsaufnahme $P_1$ gemessen wird, dann die Strömung gezielt in die andere Richtung verändert wird und die elektrische Leistungsaufnahme $P_2$ gemessen wird, in dem Fall, in dem eine Strömungsveränderung zu einem Anstieg des Signals und die andere Strömungsveränderung zu einer Minderung des Signals führt, eine anfängliche Strömung in Richtung der Strömungsveränderung, die zu einem Abfall geführt hat, vorliegt.

9. Verfahren zur Nullpunkt-Kalibrierung und Strömungsrichtungerkennung eines Strömungssensors mit elektrischem Widerstand (1) mit negativem Temperaturkoeffizient (NTC) nach Anspruch 2, **dadurch gekennzeichnet, dass** beim Vorliegen eines Signals $P_0$, das sich vom Signal $P_{max}$ für das Vorliegen keiner Strömung unterscheidet, die Strömung erst gezielt in eine Richtung verändert wird und die elektrische Leistungsaufnahme $P_1$ gemessen wird, dann die Strömung gezielt in die andere Richtung verändert wird und die elektrische Leistungsaufnahme $P_2$ gemessen wird, in dem Fall, in dem beide Strömungsveränderung zu einem Abfall des Signals führen, bei jeweils gleicher Strömungsveränderung die Differenz zwischen der ersten und zweiten gemessenen elektrischen Leistungsaufnahmen bei Strömungsveränderung ($P_1$-$P_2$) gebildet wird und im Fall einer negativen Differenz eine anfängliche Strömung in Richtung der ersten Strömungsveränderung vorliegt und im Fall einer positiven Differenz eine anfängliche Strömung in Richtung der zweiten Strömungsveränderung vorliegt.

10. Verfahren zur Nullpunkt-Kalibrierung und Strömungsrichtungserkennung eines Strömungssensors nach Anspruch 1 mit zwei hintereinander im Strömungsweg angeordneten elektrischen Widerständen (1, 10) mit positivem oder negativem Temperaturkoeffizient (PTC, NTC), deren Arbeitstemperatur $T_{R1}$, $T_{R10}$ höher als die Eintrittstemperatur $T_I$ des strömenden Mediums ist, wobei die elektrischen Widerstände (1, 10) mit positivem oder negativem Temperaturkoeffizient (PTC, NTC) an eine Spannungsquelle (2) angeschlossen werden, mit folgenden Verfahrensschritten:

   • der Volumenstrom durch den Sensor wird kontinuierlich von einer Strömungsrichtung zur anderen Strömungsrichtung variiert,
   • dabei wird die elektrische Gesamtleistungsaufnahme P der beiden elektrischen Widerstände (1, 10) mit positivem oder negativem Temperaturkoeffizient (PTC, NTC) gemessen,
   • gleichzeitig wird eine Brückenspannung $U_{Diff}$ einer Brückenschaltung unter Einbeziehung der beiden elektrischen Widerstände (1, 10) mit positivem oder negativem Temperaturkoeffizient (PTC, NTC) sowie zweier Konstantwiderstände (15, 16) oder die Differenzspannung $U_{Diff}$ der an beiden elektrischen Widerstände (1, 10) mit positivem oder negativem Temperaturkoeffizient (PTC, NTC) anliegenden Spannungen gemessen,
   • erreicht das Messsignal der elektrischen Gesamtleistungsaufnahme P bei Verwendung elektrischer Widerstände (1, 10) mit positivem Temperaturkoeffizient (PTC) bei der kontinuierlichen Veränderung des Volumenstroms ein Minimum, so wird die Referenzbrückenspannung oder Referenzdifferenzspannung $U_{Diff,0}$ gespeichert und für den Betrieb als Signal für das Vorliegen keiner Strömung verwendet,
   • wohingegen bei Verwendung elektrischer Widerstände (1, 10) mit negativem Temperaturkoeffizient (NTC) in dem Fall, in dem das Messsignal der elektrischen Gesamtleistungsaufnahme P bei der kontinuierlichen Veränderung des Volumenstroms ein Maximum erreicht, die Referenzbrücken- oder -differenzspannung $U_{Diff,0}$ gespeichert und für den Betrieb als Signal für das Vorliegen keiner Strömung verwendet wird.

11. Verfahren zur Nullpunkt-Kalibrierung und Strömungsrichtungserkennung eines Strömungssensors nach Anspruch 10, **dadurch gekennzeichnet, dass** beim Vorliegen einer Brücken- oder Differenzspannung $U_{Diff}$, die ungleich der Referenzspannung $U_{Diff,0}$ ist, eine Strömung vorliegt und aus dem absoluten Betrag der Brücken- oder Differenzspannung $U_{Diff}$ die Strömungsrichtung und / oder der Massenstrom $\dot{m}$ bestimmt werden.

12. Verfahren zur Nullpunkt-Kalibrierung und Strömungsrichtungserkennung eines Strömungssensors nach Anspruch 1 mit zwei hintereinander im Strömungsweg angeordneten elektrischen Widerständen (1, 10) mit positivem oder negativem Temperaturkoeffizient (PTC, NTC), deren Arbeitstemperatur $T_{R1}$, $T_{R10}$ höher als die Eintrittstemperatur $T_I$ des strömenden Mediums ist, wobei die elektrischen Widerstände (1, 10) mit positivem oder negativem Temperaturkoeffizient (PTC, NTC) an eine Spannungsquelle (2) angeschlossen werden, sowie einem zwischen den beiden elektrischen Widerständen (1, 10) mit positivem oder negativem Temperaturkoeffizient (PTC, NTC) ein elektrischer Heizer (13) mit positivem oder negativem Temperaturkoeffizient (PTC, NTC) angeordnet ist, mit folgenden Verfahrensschritten:

- der Volumenstrom durch den Sensor wird kontinuierlich von einer Strömungsrichtung zur anderen Strömungsrichtung variiert,
- dabei wird die elektrische Leistungsaufnahme P des elektrischen Heizers (13) mit positivem oder negativem Temperaturkoeffizient (PTC, NTC) gemessen,
- gleichzeitig wird eine Brückenspannung $U_{Diff}$ einer Brückenschaltung unter Einbeziehung der beiden elektrischen Widerstände (1, 10) mit positivem oder negativem Temperaturkoeffizient (PTC, NTC) sowie zweier Konstantwiderstände (15, 16) oder die Differenzspannung $U_{Diff}$ der an beiden elektrischen Widerstände (1, 10) mit positivem oder negativem Temperaturkoeffizient (PTC, NTC) anliegenden Spannungen gemessen,
- erreicht das Messsignal der elektrischen Leistungsaufnahme P bei Verwendung des elektrischen Heizers (13) mit positivem Temperaturkoeffizient (PTC) bei der kontinuierlichen Veränderung des Volumenstroms ein Minimum, so wird die Referenzbrücken- oder -differenzspannung $U_{Diff,0}$ gespeichert und für den Betrieb als Signal für das Vorliegen keiner Strömung verwendet,
- wohingegen bei Verwendung des elektrischen Heizers (13) mit negativem Temperaturkoeffizient (NTC) in dem Fall, in dem das Messsignal der elektrischen Leistungsaufnahme P bei der kontinuierlichen Veränderung des Volumenstroms ein Maximum erreicht, die Referenzbrücken- oder -differenzspannung $U_{Diff,0}$ gespeichert und für den Betrieb als Signal für das Vorliegen keiner Strömung verwendet wird.

13. Verfahren zur Nullpunkt-Kalibrierung und Strömungsrichtungserkennung eines Strömungssensors nach Anspruch 12, **dadurch gekennzeichnet, dass** beim Vorliegen einer Brücken- oder Differenzspannung $U_{Diff}$, die ungleich der Referenzspannung $U_{Diff,0}$ ist, eine Strömung vorliegt und aus dem absoluten Betrag der Brücken- oder Differenzspannung $U_{Diff}$ und der der elektrischen Leistungsaufnahme P des elektrischen Heizers (13) die Strömungsrichtung und / oder der Massenstrom $\dot{m}$ bestimmt werden.

Fig. 1

Fig. 2

Fig. 3

Fig. 4

Fig.5

Fig. 6

Fig.7

Fig. 8

EP 1 962 067 A2

18

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1084369 B1